# EUROPEAN PATENT SPECIFICATION

(11) **EP 4 318 034 B1**
(45) Date of publication and mention of the grant of the patent: **31.12.2025**
(21) Application number: 23187747.3
(22) Date of filing: 26.07.2023
(51) Int. Cl.: G01S 7/4865, G01S 7/4913, G01S 7/4915, G01S 17/10, G01S 17/34

(54) **A METHOD AND A DEVICE FOR DETERMINING A DISTANCE TO A TARGET**
VERFAHREN UND VORRICHTUNG ZUR BESTIMMUNG EINER ENTFERNUNG ZU EINEM ZIEL
PROCÉDÉ ET DISPOSITIF POUR DÉTERMINER UNE DISTANCE PAR RAPPORT À UNE CIBLE

(30) Priority: 01.08.2022 US 202217878154
(43) Date of publication of application: 07.02.2024
(73) Proprietor: Imec VZW, 3001 Leuven (BE)
(72) Inventor: Jiwon, Lee, 3020 Herent (BE); Azhar, Din, Cumbernauld, G68 9DL (GB); Orges, Furxhi, Fort Collins, 80526 (US); Nikolaos, Papadopoulos, 3010 Leuven (BE); Mauricio, Velazquez Lopez, 3000 Leuven (BE)
(74) Representative: AWA Sweden AB

(56) References cited:
- DE-A1- 102013 002 683
- DE-A1- 102016 217 838
- US-A1- 2021 072 382
- US-A1- 2022 003 854

## Description

### Technical field

The present inventive concept relates to a method and a device for determining a distance to a target. In particular, the present inventive concept relates to a method and a device for determining the distance to the target based on the target reflecting light transmitted by a light source.

### Background

Light detection and ranging (Lidar) is used in many applications wherein range of targets is of interest. Lidar is an active imaging technology wherein light is transmitted from a light source and light reflected by target(s) is detected. Lidar may thus be used to detect presence of targets and a distance to such targets.

The light transmitted by the light source will need to propagate to the target and back to a detector. Thus, Lidar involves a propagation time for the light, which may affect resolution of the imaging technology when a beam of light is scanned over a field of view. Thus, if it is desired to image a large field of view very quickly, parallelism is required in order to improve resolution of Lidar technology. Thus, at least portions of the field of view should be illuminated and detected simultaneously.

Processing of measurement data in Lidar technology may require large processing power. For instance, for frequency modulated continuous wave (FMCW) Lidar, a digital signal may be analyzed using Digital Fourier Transform (DFT) in order to determine the distance to target(s). However, DFT is associated with processing of large data rates and result in complex systems requiring large processing power.

Therefore, there is a need for a more efficient processing of measurement data for determining a distance to a target.

US 2021/0072382 A1 discloses a Lidar system that includes a light transmission component driven by a phase-keyed burst pattern generator operable to apply a phase-coded key for activating the light source in a series of on/off pulses for the transmitted light. The on/off sequence is chosen such that the pattern's auto-correlation function has a maximized peak to side lobe ratio. The on/off pulses of the received light reflected from the object or scene is converted to a bitstream that is cross-correlated with the phase-coded key. A peak detector finds the peak of the cross-correlation function and generate a time-of-flight signal indicative of the time between the transmission of the transmitted light and the peak of the cross-correlation function.

DE 10 2016 217 838 A1 discloses a distance measuring device with lighting for emitting a modulated light and a signal generator for generating an analog modulation signal for operating the lighting, with a receiver for receiving modulated light signals and for generating an analog received signal into a binary data stream, with a signal evaluation unit, which uses a Fourier transformation to determine a phase and, from this, a distance value based on the binary data stream.

DE 10 2013 002 683 A1 discloses a method for generating a modulated signal depending on the transmission data to be transmitted from a vehicle. A light source of the vehicle is controlled with the modulated signal. The light emitted from the light source is received and is reflected by an object in a surrounding of the vehicle. A receiving signal is generated depending on the received light. A combination signal is generated by combining the modulated signal with the received signal. A distance to the object is determined depending on the combination signal.

US 2022/0003854 A1 discloses techniques and systems to resolve return signals among pixels in lidar systems.

### Summary

An objective of the present inventive concept is to provide fast processing of data representing detection of light transmitted by a light source being reflected by a target.

This and other objectives are at least partly met by the invention as defined in the independent claims. Preferred embodiments are set out in the dependent claims.

According to a first aspect, there is provided a method for determining a distance to a target, said method comprising: receiving a bitstream of binary digits corresponding to a variation in time of a time-varying signal based on light transmitted by a light source being reflected by the target, wherein each binary digit in the bitstream is defined based on the time-varying signal at a time instance represented by the binary digit being above or below a threshold; comparing the bitstream of binary digits to a set of stored reference bitstreams of binary digits, wherein each reference bitstream represents a distance to the target; and determining the distance to the target based on a selection of a reference bitstream in the set of stored reference bitstreams based on said comparing.

According to the first aspect, a bitstream of binary digits is used, wherein each binary digit represents a detected signal being above or below a threshold. Thus, a detected signal obtained for detecting light reflected by the target is represented by a stream of binary digits (zeros and ones) in accordance with variation of the signal over time. Each binary digit may thus represent a value of the detected signal being above or below the threshold to form a representation of the time-varying signal. Each binary digit may further represent a value of the time-varying signal at a mutually unique time instance.

It is an insight of the present invention that such a bitstream may provide a unique signature in dependence of a distance to a target. For instance, when using frequency modulated continuous wave (FMCW) light detection and ranging (Lidar), a chirp may be transmitted by the light source wherein a frequency of the transmitted signal varies during the chirp. **In** such case, a reflected signal from the target may be mixed with the transmitted signal and a frequency shift of the reflected signal and the transmitted signal corresponds to a time for propagating the transmitted signal to and from the target (i.e., corresponding to the distance from the light source to the target). This implies that the time-varying signal may be based on mixing of the light transmitted by the light source and light reflected by the target and may comprise a frequency which represents the distance to the target. Frequency content of the bitstream may thus form a unique signature of the time-varying signal which represents the distance to the target.

According to an alternative, a time of flight of the transmitted light signal to the target and back is determined. Here, a moment in time when the light signal is transmitted may be used as a trigger for acquiring a detected signal that is converted to the bitstream. The detected signal may thus represent a time delay and when the detected signal is above a threshold, the detected signal indicates that a reflection from the target is received. The received bitstream may thus form a unique signature, wherein the unique signature represents a particular time delay of the reflection from the target. The use of a bitstream being compared to reference bitstreams may be particularly useful when used with a single photon avalanche diode (SPAD) detector for detecting the reflected light, wherein the detector is very sensitive in amplifying a small amount of reflected light into a detectable signal.

Thanks to using a set of stored reference bitstreams, the received bitstream may be directly matched to the set of stored reference bitstreams in order to determine the distance to the target. For instance, the stored reference bitstream best matching the received bitstream may be determined, whereby the distance to the target associated with the best matching reference bitstream may be used as a determination of the distance to the target.

This implies that the received bitstream of binary digits may simply be compared to a set of stored reference bitstreams in order to determine the distance to the target. Thus, determining of the distance to the target does not require complex processing of a detected signal. For instance, no Fourier transformation of the detected signal is necessary. Rather, binary digits may be compared to each other which is a very simple operation.

Thanks to the method, distances to targets may be determined with high resolution. When distances to targets are to be determined with high resolution, an amount of data for representing the light reflected by targets becomes large. Thanks to avoiding any Fourier transformation, the method enables processing of data for determining the distance to targets with high resolution for a large range of distances.

The method allows processing of data representing a large volume in which targets may be placed with high spatial resolution (i.e., a large field of view for a large range of distances with a high spatial resolution). Also or alternatively, the method allows processing of data with a high frame rate (i.e., determination of distances to targets in a volume of interest may be updated at a high rate).

Thus, instead of performing advanced analysis of a detected signal, the detected signal is represented as a bitstream of binary digits which may be easily compared to reference bitstreams. Hence, memory is needed for storing the reference bitstreams providing the benefit of greatly reducing processing resources for determining the distance to target(s).

The number of reference bitstreams is dependent on a resolution at which the distance to targets is to be determined and a range of possible distances to targets. Thus, if a high resolution and a large range of distances is required, the number of reference bitstreams may be relatively large. Nevertheless, memory resources required for storing the reference bitstreams are still small in comparison to the processing power saved by not requiring advanced analysis, such as Fourier transformation, of the detected signal.

The bitstream of binary digits may be received by a processing unit (implemented in hardware / software or a combination thereof) which is directly connected to a detector for detecting the time-varying signal. However, according to an alternative, the bitstream of binary digits may be received by a unit which is external to the detector. Thus, the method may be performed externally to the detector. Since each time instance of the detected signal may be represented by a single binary digit, an amount of data needed to be transmitted from the detector is relatively small enabling the method to be implemented externally to the detector.

Comparing of the bitstream of binary digits to a set of stored reference bitstreams implies that bitstreams are compared in order to find a reference bitstream that matches the received bitstream of binary digits. The bitstreams being compared may involve that presence of sequences of bits in the bitstream is identified or that the binary digits are compared bit by bit in order to identify how many bits are the same in the received bitstream and the reference bitstream.

Comparing of the bitstream of binary digits to a set of stored reference bitstreams may imply that the received bitstream is compared to each of the stored bitstreams. However, it should be realized that the received bitstream may be compared only to a subset of the stored reference bitstreams. For instance, if a target has been determined to be at a particular range in a first frame, the received bitstream for a subsequent frame may be compared only to reference bitstreams around the particular range previously determined.

One or more reference bitstreams may be selected based on the comparing of the received bitstream to the set of stored reference bitstreams. The reference bitstream(s) may be selected based on a matching value, determined by the comparing, representing how well the reference bitstream match the received bitstream, such as by selecting the reference bitstream(s) having a highest matching value.

Since each reference bitstream represents a particular distance to the target, the distance to the target may be determined based on selected reference bitstream(s). For instance, if one reference bitstream is selected, the distance to the target may be simply determined as being the distance represented by the selected reference bitstream. If several reference bitstreams are selected, the distance to the target may be determined based on processing of the distances represented by the selected reference bitstreams, such as forming an average based on the distances represented by the selected reference bitstreams.

As used herein, the distance to a target corresponds to a distance between an output and the target, wherein the output may be a transmitter for outputting light towards the target. The reflected light from the target may be collected at an input, such as a receiver. The input and the output may be arranged at a common distance from the target.

According to an embodiment, the method further comprises detecting light transmitted by the light source being reflected by the target to form a detected signal and comparing the detected signal to a threshold for converting the detected signal to a binary digit.

The bitstream of binary digits may be generated by detecting a detected signal and comparing the detected signal to the threshold at a plurality of time instances, wherein the detected signal forms the time-varying signal. Thus, the method is further able to generate the bitstream of binary digits.

The bitstream of binary digits may be generated by a detector and a processing unit (which may be implemented in hardware, software, or a combination thereof) may be configured to receive the bitstream of binary digits from the detector.

According to an embodiment, light being reflected by the target is mixed with light transmitted by the light source to form a mixed light signal and wherein detecting light comprises detecting the mixed light signal.

Thus, the time-varying signal being based on light being reflected by the target may imply that the mixed light signal is detected. However, it should be realized that, in other embodiments, the reflected light signal may be directly detected forming the time-varying signal.

Thanks to using a mixed light signal, the time-varying signal may represent a difference in frequency between the light transmitted by the light source and the light reflected by the target. Thus, the time-varying signal may have a varying signal that varies with a frequency corresponding to the difference in frequency between the light transmitted by the light source and the light reflected by the target.

According to an embodiment, the light transmitted by the light source is a frequency modulated continuous wave, FMCW, signal comprising chirps during which frequency of the FMCW signal is increased.

Thanks to using a FMCW signal comprising chirps, the frequency of light transmitted by the light source will vary with time. This implies that a frequency relation between light transmitted by the light source and light having propagated to a target and back depends on a distance to the target. Hence, by determining the frequency of the mixed signal, the distance to the target may be determined.

The frequency of the FMCW signal may be monotonically increased with a constant rate of increasing the frequency during the chirp. Between chirps, the frequency may be reset to an initial value used at start of the next chirp.

According to an embodiment, an output from comparing the detected signal to the threshold is periodically sampled for forming the bitstream of binary digits.

Thus, the detected signal may be converted to a digital representation, wherein one binary digit represents one sample of the detected signal. Thus, the bitstream of binary digits will represent a sequence of samples.

According to an embodiment, the comparing the bitstream of binary digits to a set of stored reference bitstreams of binary digits comprises determining a matching value for each stored reference bitstream based on bit-wise comparison, wherein the matching value represents similarity between the bitstream of binary digits and the stored reference bitstream, and wherein the bit-wise comparison comprises comparing the binary digits of the bitstream and the stored reference bitstream at corresponding positions and increasing the matching value when the binary digits are equal.

Thus, the received bitstream and the reference bitstream may be compared by comparing the bits at corresponding positions of the bitstream. The bit at a position 1 in the received bitstream is compared to the bit at position 1 in the reference bitstream, the bit at position 2 in the received bitstream is compared to the bit at position 2 in the reference bitstream and so forth. If the compared bits at a position are equal, i.e., if both bits are zero or if both bits are one, the received bitstream and the stored bitstream match at the position.

The bit-wise comparison may generate a matching value which represents the similarity between the received bitstream and the stored reference bitstream. The matching value may be determined as a combination, such as a sum, of a result of each individual bit-wise comparison. Thus, if the bits at a position match, a value of "1" may be added to the matching value. Also, if the bits at a position do not match, a value of "1" may be subtracted from the matching value.

It should be realized that the matching value may be determined in numerous other ways as a combination of the result of the bit-wise comparisons.

The determined matching value may thus take into account each bit of the received bitstream and the stored reference bitstream for forming the matching value. Thus, the matching value may represent the similarity for the entire received bitstream and the stored reference bitstream. Hence, using a longer bitstream allows determination of the best matching reference bitstream among the set of reference bitstreams with high accuracy.

The individual bit-wise comparison may be easily and quickly performed since it only requires comparing the value of two individual bits. For instance, if implemented in hardware, the bit-wise comparison may be performed by a simple XNOR-gate. Each of the bits of the received bitstream may also be simultaneously compared to the corresponding bits of the reference bitstreams, e.g., by using a plurality of XNOR gates each dedicated to comparing the bits at a respective position in the bitstreams.

According to an embodiment, the comparing the bitstream of binary digits to a set of stored reference bitstreams comprises parallel processing of the comparing of the bitstream of binary digits to each of the stored reference bitstreams.

Since the bit-wise comparison may be performed quickly and, if implemented in hardware, by simple circuitry, the parallel processing may not require extensive processing resources. Thus, it is possible to perform parallel processing without requiring extensive processing resources.

Thanks to using parallel processing of comparing of the received bitstream to the stored reference bitstreams, determination of the reference bitstream(s) to be selected for determining the distance to the target may be performed very quickly. This facilitates determining the distance to the target at a high frame rate.

According to an embodiment, for each stored reference bitstream, determining the matching value comprises determining a plurality of temporary matching values using said bit-wise comparison, wherein the plurality of temporary matching values is determined for different shifts of binary digits of the bitstream to binary digits of the reference bitstream, wherein the matching value is determined based on the plurality of temporary matching values.

It is realized that the time-varying signal represented by the received bitstream may not be in phase with a corresponding time-varying signal represented by the reference bitstream. This implies that the bit-wise comparison may indicate a poor matching between the received bitstream and the reference bitstream representing a correct distance to the target. Hence, by determining temporary matching values for different shifts of the received bitstream in relation to the reference bitstreams, it may be ensured that the received bitstream is compared to the reference bitstreams while the time-varying signals are in phase.

The different shifts of the bitstreams may be achieved by the received bitstream being compared to the stored reference bitstreams for determining first temporary matching values and, thereafter, binary digit(s) of the received bitstream at a start of the bitstream being shifted out and new binary digit(s) being added at an end of the bitstream to form a different shift of the binary digits of the received bitstream. Then, the received bitstream may again be compared to the stored reference bitstreams.

The received bitstream may be shifted one bit at a time between comparisons to the reference bitstreams. However, it should be realized that the received bitstream may alternatively be shifted a few bits at a time, such as two or three bits. This implies that the received bitstream and the reference bitstream representing the correct distance to the target may not be exactly in phase in any of the comparisons of the received bitstream and the reference bitstream. However, it may still be possible to correctly determine the distance to the target. Further, by not performing comparisons for shifts of one bit of the received bitstream, the number of comparisons needed may be reduced.

It should further be realized that the different shifts of the received bitstream to the reference bitstream may be achieved in other ways. For instance, the reference bitstreams may be used as a cyclic representation such that, when reaching a last bit of a sequence of bits of the reference bitstreams, the reference bitstream continues at the first bit of the sequence. Further, a start bit of the reference bitstream in the cyclic representation may be selectable for defining different shifts of the reference bitstream. Thus, different shifts of the received bitstream to the reference bitstream may be achieved by changing an indication of the start bit in the cyclic representation of the reference bitstream.

When determining the plurality of temporary matching values for different shifts, the temporary matching values may vary in dependence of a phase relation between signals represented by the received bitstream and the reference bitstreams. Thus, at least when the received bitstream has been compared to the reference bitstreams for different shifts representing a full period of the time-varying signal of the received bitstream, a maximum possible value of the matching value between the received bitstream and the reference bitstream has been determined among the temporary matching values. Thus, different shifts may be used representing a full period of possible frequencies of the time-varying signal. However, it should be realized that fewer shifts may be used in order to speed up determination of the distance to the target or more shifts may be used (extending into further periods of the time-varying signal) for increasing accuracy of determination of the distance to the target.

According to another embodiment, the set of reference bitstreams may comprise pairs (or groups) of reference bitstreams, wherein the reference bitstreams within a pair (or group) represent different shifts of the reference bitstream to the received bitstream. Thus, by comparing the received bitstream to the reference bitstreams in a pair (or group), the similarity of the received bitstream to the reference bitstreams may be determined for different phase relations between signals represented by the received bitstream and the reference bitstreams. This implies that a matching value for the received bitstream to the pair (or group) of reference bitstreams may be immediately determined by comparing the received bitstream to each of the reference bitstreams in the pair (or group). Hence, in such case, there is no need to shift any bits in the bitstreams and there is no need to sequentially determine temporary matching values. Rather, the received bitstream may be simultaneously compared to all the reference bitstreams in all pairs (or groups) of reference bitstreams such that the distance to the target may be quickly determined.

The determining of the matching value based on the plurality of temporary matching values may be performed in many different manners. The matching value may be determined using several (or all) temporary matching values, such as by determining an average the temporary matching values or an average of squared temporary matching values (if the temporary matching values may be negative).

According to another embodiment, the determining of the matching value based on the plurality of temporary matching values may involve selecting a largest temporary matching value among the plurality of temporary matching values as the matching value.

According to an embodiment, the different shifts of binary digits represent different phases of a period of the time-varying signal and wherein the matching values is determined based on a maximum of the plurality of temporary matching values within the period of the time-varying signal.

This is a simple manner of determining the matching value based on the temporary matching values, requiring no further computation of the temporary matching values for determining the matching value.

According to an embodiment, determining the distance to the target comprises selecting a reference bitstream among the set of reference bitstreams based on comparing the matching values of the set of reference bitstreams to each other.

Thus, by comparing the matching values to each other, the distance to the target may be determined. For instance, the reference bitstream having a highest matching value may be selected, whereby the distance to the target may be determined to be the distance associated with the selected reference bitstream.

It should however be realized that determining the distance to the target may also involve comparing the matching values to a threshold. For instance, if no target is present, low matching values based on noise may be determined for all of the reference bitstreams. Thus, none of the matching values should be used for presenting a distance to a (non-existing) target. Reporting of a distance to a non-existing target may be avoided by also comparing the matching values to a threshold.

Also, if plural targets are present, at different distances in a scene, matching values above a threshold may be determined for completely different distances in the scene. Thus, by further comparing the matching values to the threshold, distances to plural targets may be determined.

According to an embodiment, determining the distance to the target further comprises selecting a plurality of reference bitstreams having largest matching values and forming an interpolation based on the largest matching values to determine the distance to the target with an improved resolution.

The matching values of reference bitstreams at neighboring distances to the reference bitstream having a highest matching value may be relatively large and may comprise further information of the distance to the target. The relation between the matching values of the selected plurality of reference bitstreams may indicate whether the correct distance to the target is at a center distance of a sub-range of distances represented by the reference bitstream having a largest matching value or is slightly closer or farther away. Hence, by selecting a plurality of reference bitstream, the distance to the target may be determined with even higher accuracy.

According to an embodiment, the method further comprises receiving a plurality of bitstreams of binary digits corresponding to spatially separate detections of light, wherein the plurality of bitstreams is processed in parallel.

Thus, targets may be determined in a field of view, wherein separate detections of light may represent different locations in the field of view.

Thanks to the limited processing resources required for determining the distance to the target, a plurality of received bitstreams for spatially separated detections of light may be performed in parallel so as to allow distances to target within a field of view to be determined very quickly and allowing a high frame rate for determining distances to targets within the field of view to be used.

According to a second aspect, said second aspect not being part of the invention as defined in the appended claims, there is provided a computer program product comprising computer-readable instructions such that when executed on a processing unit the computer program will cause the processing unit to perform the method according to the first aspect.

Effects and features of this second aspect are largely analogous to those described above in connection with the first aspect. Embodiments mentioned in relation to the first aspect are largely compatible with the second aspect.

The computer program product may implement the method in a processing unit, which may be a dedicated processing unit for performing the method or may be a general-purpose processing unit which may be able to perform the method based on the computer program product.

The computer program product may comprise a computer-readable medium on which the computer-readable instructions are stored. The computer program product may thus be provided as a non-transient computer program product stored on any tangible medium. Alternatively, the computer program product may be provided as a signal carrying the computer-readable instructions for allowing the computer program product to be loaded into a memory accessible to the processing unit.

The computer program product may have access to a memory storing the reference bitstreams to enable the computer program product to compare the received bitstream to the stored reference bitstreams.

According to a third aspect, there is provided a device for determining a distance to a target, said device comprising: a processor configured for: receiving a bitstream of binary digits corresponding to a variation in time of a time-varying signal based on light transmitted by a light source being reflected by the target, wherein each binary digit in the bitstream is defined based on the time-varying signal at a time instance represented by the binary digit being above or below a threshold; comparing the bitstream of binary digits to a set of stored reference bitstreams of binary digits, wherein each reference bitstream represents a distance to the target; and determining the distance to the target based on a selection of a reference bitstream in the set of stored reference bitstreams based on said comparing.

Effects and features of this third aspect are largely analogous to those described above in connection with the first and second aspects. Embodiments mentioned in relation to the first and second aspects are largely compatible with the third aspect.

The processor may be implemented as a processing unit which may be configured to execute a computer program for determining the distance to the target. Thus, the processing unit may be a general-purpose processing unit provided with a dedicated computer program.

Alternatively, the processor may be implemented as dedicated hardware for determining the distance to the target, such as an Application-Specific Integrated Circuit (ASIC) or a Field-Programmable Gate Array (FPGA), which may be configured to implement functionality for determining the distance to the target.

The device may further comprise a memory storing the set of reference bitstreams and the processor may be configured to have access to the set of reference bitstreams for allowing the processor to compare the received bitstream to the reference bitstreams.

The determining of the distance to the target may be performed with limited requirements on processing resources allowing use of a simple device and/or allowing the distance to the target to be quickly determined.

According to an embodiment, the device further comprises: a light source for transmitting light towards the target; a mixer for mixing light reflected by the target and light transmitted by the light source for forming a mixed light signal; a detector for detecting the mixed light signal; and a comparator for comparing output from the detector to a threshold for converting output from the detector to a binary digit.

Thus, the device further comprises components enabling detecting a signal based on reflected light and forming of the bitstream of binary digits.

The detecting of the mixed light signal may for instance be used for determining distances to targets using FMCW Lidar, wherein a frequency difference between reflected light and light transmitted by the light source is indicative of the distance to the target.

According to an embodiment, the device further comprises a controller for controlling timing of the processor in relation to timing of a pulse transmitted by the light source.

Thus, the controller may control timing of pulses transmitted by the light source. The pulses transmitted by the light source are associated with a time window during which reflected light is expected to reach a detector. Thus, the controller may also control a timing of the processor to ensure that bitstreams of the relevant time window are processed and that the processing accurately determines the distance to the target.

For instance, the controller may control resetting of temporary matching values or the matching value associated with each reference bitstream in synchronization with output of a new pulse by the light source. Thus, the determining of the distance to the target may not be affected by matching values determined for previous pulses.

### Brief description of the drawings

The above, as well as additional objects, features, and advantages of the present inventive concept, will be better understood through the following illustrative and non-limiting detailed description, with reference to the appended drawings. In the drawings like reference numerals will be used for like elements unless stated otherwise.
Fig. 1 is a schematic view of a device for determining a distance to a target according to an embodiment.
Fig. 2 is a schematic view illustrating interpolation for determining the distance to the target with improved resolution.
Fig. 3 is a flow chart of a method for determining a distance to a target according to an embodiment.

### Detailed description

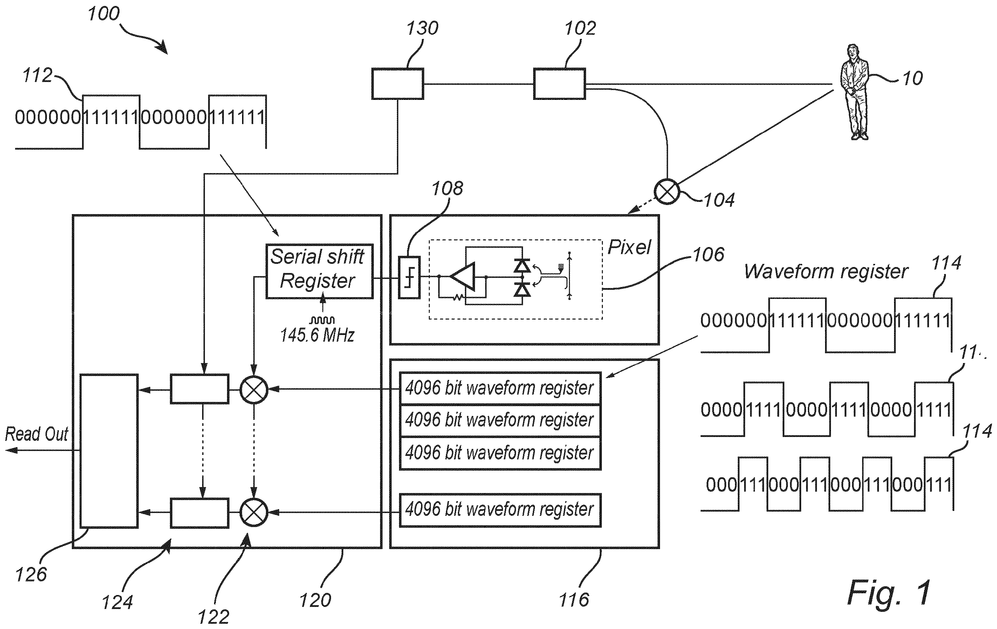

Referring now to Fig. 1, a device 100 for determining a distance to a target 10 will be described.

The device 100 is configured to process acquired data for determining the distance to the target 10. Thus, the device 100 comprises a processor 120 for processing data. The processor 120 may be arranged separately from a set-up for acquisition of data and may be configured to communicate through wired or wireless communication for receiving data based on which the distance to the target 10 is determined.

In Fig. 1, the device 100 is illustrated as comprising components for acquisition of data. However, it should be realized that these components are not necessarily part of the device 100 which processes acquired data in order to determine the distance to the target 10.

As shown in Fig. 1, the device 100 comprises a light source 102 for transmitting light towards the target 10. The light source 102 may be configured to transmit frequency modulated continuous wave (FMCW) chirps. Thus, the light source 102 may transmit pulses of light having a monotonically changing frequency during the pulse, such as having a frequency which increases linearly with time from a first frequency to a second frequency during the pulse.

The light transmitted from the light source 102 may hit a target 10 and may be reflected back towards the device 100 such that the device 100 uses light detection and ranging (Lidar) for determining the distance to the target 10. Reflected light from the target 10 may be collected and may be mixed by a mixer 104 for mixing light reflected by the target 10 and light transmitted by the light source 102. The light transmitted by the light source 102 may be immediately passed to the mixer 104, whereas the light reflected by the target 10 has propagated to the target 10 and back. Thus, the reflected light is delayed in relation to the light transmitted by the light source 102 when reaching the mixer 104.

Using FMCW Lidar, the frequency of the reflected light differs from the frequency of the light transmitted by the light source 102 when reaching the mixer 104 and a difference in frequencies is dependent on the distance to the target 10. The light transmitted by the light source 102 and the reflected light may thus be mixed by the mixer 104 for forming a mixed signal which may exhibit an intensity modulation which is varying with a beat frequency corresponding to the difference in frequencies between the light transmitted by the light source 102 and the reflected light. Using chirps wherein the frequency changes linearly with time implies that the beat frequency will be constant during an integration time of acquiring the mixed light signal.

The device 100 further comprises a detector 106 for detecting the mixed light signal. The detector 106 may comprise a photodiode for detecting intensity of the mixed light signal. The detector 106 may be configured to detect a time-varying signal, wherein the time-varying signal exhibits the beat frequency.

The device 100 further comprises a comparator 108 for comparing a detected signal detected by the detector 106 to a threshold. The threshold may be set in relation to a baseline, where the detected signal is configured to provide an alternating current (AC) signal on top of the baseline. For instance, the baseline may be zero, but it should be realized that the baseline may be a different value depending on set-up of the detector 106 as would be appreciated by a person skilled in the art. The comparator 108 may output two different signal levels depending on whether the detected signal is above or below the threshold. Thus, the output from the comparator 108 may correspond to a binary digit representing the detected signal being above or below the threshold.

The output from the comparator 108 may be read into a serial shift register and the reading of binary digits into the serial shift register may be clocked by a sampling signal. Thus, the output from the comparator 108 may be periodically sampled and after sampling of the output from the comparator 108 the serial shift register may store a bitstream 112 of binary digits.

The device 100 may thus implement a method for forming the bitstream 112 of binary digits. The method may comprise transmitting light towards a target 10 and mixing light being reflected by the target 10 with light transmitted by the light source 102 to form a mixed light signal, wherein the light transmitted by the light source is a FMCW signal such that the mixed light signal exhibits a beat frequency corresponding to the difference in frequency between the reflected light and the light transmitted by the light source 102. The method may further comprise detecting a detected signal based on light transmitted by the light source 102 being reflected by the target 10, such as detecting the mixed light signal. The method may further comprise comparing the detected signal to a threshold for converting the detected signal to a binary digit. The method may further comprise periodically sampling an output from comparing the detected signal to the threshold for forming the bitstream 112 of binary digits.

The bitstream 112 of binary digits represents a waveform which is dependent on the beat frequency. Thus, the bitstream 112 of binary digits may have a unique waveform in dependence of the distance to the target 10.

Thanks to the detected signal being represented as the bitstream 112 of binary digits, wherein each binary digit represents a value of the time-varying signal detected by the detector at a respective time instance, the detected signal is represented by a small amount of data while including information of the distance to the target 10.

The bitstream 112 of binary digits may represent the time-varying signal during a time interval, which may correspond to a duration of a chirp or a portion of the duration of the chirp. Using a relatively long bitstream, the distance to the target 10 may be determined with a greater reliability.

According to an illustrative and non-limiting example, a chirp has a duration of approximately 50 µs. In some embodiments, a single chirp may be used in determining the distance to the target 10. In other embodiments, several chirps may be used and the determination of the distance to the target 10 may be based on integration of information from several chirps.

An available duration for a chirp is a function of a number of pixels that are to be detected and a refresh time desired. That is, the reflected light may be detected in a plurality of pixels of an array in order to provide spatial resolution of detecting targets. The refresh time indicates a rate at which the determination of distances to targets 10 is updated. For example, to detect an image array of 320x240 pixels with a refresh time of 20 Hertz, the maximum duration available for each pixel is 1/(320x240x20) = 651 ns.

If several pixels may be processed in parallel, the time interval available for each pixel increases by a factor equal to the number of parallel processes. For the example given, if 80 pixels can be detected in parallel (one for every four columns), the available time interval for each pixel increases to 651 ns x 80 = 52.08 µs.

Each chirp may comprise a frequency shift of 1.5 GHz with a center frequency in, for example, a THz range corresponding to infrared light or visible light. This implies that the beat frequency generated by the reflected signal from a target 10 at a distance of 300 m is approximately 65 MHz. The output from comparing the detected signal to the threshold may be periodically sampled using a sampling frequency of 145.6 MHz, which implies that the beat frequency of interest (if it is desired to detect targets 10 at a distance up to 300 m) is below a Nyquist frequency. The bitstream 112 of binary digits may for instance be 4096 bits (i.e., 512 bytes) long, which corresponds to sampling the detected signal with the sampling frequency for 28 µs, that is more than half of the duration of the chirp. Thus, the bitstream 112 of binary digits may require a small amount of memory while representing a signal that may be able to determine distances up to 300 m.

It is realized that if a length of the bitstream 112 is decreased, a smaller amount of memory is required, whereas if a length of the bitstream 112 is increased, the beat frequency in the detected signal may be determined with higher accuracy.

Although the forming of the bitstream 112 of binary digits have been described above in relation to FMCW Lidar, it should be realized that the bitstream 112 of binary digits may be a result of another type of measurement technology.

For instance, a time of flight of the transmitted light signal to the target and back may be determined. A SPAD detector may be used for detecting small amounts of reflected light, amplifying received light into a detectable signal. Here, a moment in time when the light signal is transmitted may be used as a trigger for acquiring a detected signal that is converted to the bitstream. The detected signal may thus represent a time delay and when the detected signal is above a threshold, the detected signal indicates that a reflection from the target is received. The received bitstream may thus form a unique signature, wherein the unique signature represents a particular time delay of the reflection from the target.

The processor 120 is configured to receive the bitstream 112 of binary digits and is configured to process the received bitstream 112 in order to determine the distance to the target 10.

The processor 120 is configured to compare the received bitstream 112 of binary digits to a set of stored reference bitstreams 114 of binary digits. The device 100 may comprise a memory 116 storing the set of reference bitstreams 114. Each of the reference bitstreams 114 may represent a sequence of binary digits corresponding to a waveform formed by light being reflected from the target 10 at a particular distance.

The waveforms depend on the beat frequency formed by the reflected light and the light transmitted by the light source 102. A range of possible distances to targets 10 divided by a resolution for determining the distance provides a number of different beat frequencies that may need to be identified in order to determine the distance to the target 10. This defines a number of beat frequencies of interest. For instance, if the range of possible distances is 300 m and the distance to targets 10 is to be determined with a 10 cm resolution, the number of different beat frequencies is 3000.

The number of reference bitstreams 114 formed should at least correspond to a number of beat frequencies of interest. Each of the reference bitstreams 114 may represent a waveform of a unique beat frequency. However, in some embodiments, plural (such as two or three) reference bitstreams 114 are used for each beat frequency, wherein the plural reference bitstreams 114 for the same beat frequency represent different phase shifts of the waveform of the beat frequency.

The processor 120 may be configured to use the comparison of the received bitstream 112 to the set of stored reference bitstreams 114 for identifying and selecting one or more reference bitstreams 114 matching the received bitstream 112, such as providing a best match to the received bitstream 112.

Each reference bitstream 114 may be associated with a distance to the target 10. Thus, when selecting a reference bitstream 114, the processor 120 may be configured to simply determine the distance to the target 10 by determining the distance to the target 10 associated with the selected reference bitstream 114. However, as explained below, a plurality of reference bitstreams 114 may be selected and the distance to the target 10 may be determined by further analyzing matching of the received bitstream 112 to the selected reference bitstreams 114.

According to an embodiment, the processor 120 may be configured to compare the received bitstream 112 to the set of stored reference bitstreams 114 by determining a matching value for the received bitstream 112 in relation to each of the reference bitstreams 114. The matching value may represent a similarity between the received bitstream 112 and the reference bitstream 114.

The determining of the matching value for the received bitstream 112 in relation to one of the reference bitstreams 114 may be based on bit-wise comparison. Thus, each of the binary digits of the received bitstream 112 is compared to a respective corresponding binary digit of the reference bitstream 114. This implies that the binary digit at position 1 of the received bitstream 112 is compared to the binary digit at position 1 of the reference bitstream 114, the binary digit at position 2 of the received bitstream 112 is compared to the binary digit at position 2 of the reference bitstream 114, and so forth.

When comparing binary digits, a check is made whether the binary digits match (the binary digits being equal, i.e., both are a zero or both are a one) or whether the binary digits do not match (the binary digits differ, i.e., one of the binary digits is zero and another of the binary digits is one). If the binary digits are equal, the received bitstream 112 and the reference bitstream 114 match at that position.

The matching value may be determined as a combined value based on each of the bit-wise comparisons. According to an embodiment, if the binary digits at a position in the received bitstream 112 and the reference bitstream 114 match, a value of "1" may be added to the matching value, whereas if the binary digits at a position in the received bitstream 112 and the reference bitstream 114 do not match, a value of "1" may be subtracted from the matching value.

It should be realized that the matching value may be determined in alternative ways, such as only counting a number of positions at which the received bitstream 112 and the reference bitstream 114 match.

The processor 120 may comprise a comparing module 122 for performing bit-wise comparison of the received bitstream 112 to each of the reference bitstream 114. The comparing module 122 may be implemented in software in order to perform the bit-wise comparison. However, according to an alternative, the comparing module 122 may be implemented in hardware. Each of the bit-wise comparisons may be performed by an XNOR-gate, which compares two binary digits and outputs a result in dependence of whether the binary digits match or not.

The comparing module 122 may be configured to simultaneously compare all of the binary digits of the received bitstream 112 to all of the binary digits of the reference bitstream 114. If the comparing module 122 is implemented in hardware, this implies that the comparing module 122 may comprise one XNOR-gate for each of the positions of the bitstreams 112. As an alternative, the comparing module 122 may comprise an n-bit XNOR-gate for optimizing a plurality of XNOR-gates.

Using XNOR-gates, the value of a bit-wise comparison is "1" if the binary digits match and "0" if the binary digits do not match. The comparing module 122 may simply output a sum of the bit-wise comparisons as the matching value, which will then correspond to a count of the number of positions at which the received bitstream 112 and the reference bitstream 114 match.

The comparing of the received bitstream 112 to the set of stored reference bitstreams 114 may comprise parallel processing of the comparing of the received bitstream 112 to each of the reference bitstreams 114. Thus, the received bitstream 112 may be separately and simultaneously compared to each individual reference bitstream 114.

This may be achieved by the comparing module 122 comprising parallel processes for performing the comparisons. Thus, the received bitstream 112 may be provided to each of the parallel processes, and in each of the parallel processes the received bitstream 112 is compared to a unique reference bitstream 114. For instance, the comparing module 122 may comprise a set of comparing units, wherein each comparing unit is configured to receive the received bitstream 112 and receive one of the reference bitstreams 114, wherein the comparing unit compares the received bitstream 112 to the reference bitstream 114 for determining the matching value. Thus, different comparing units compare the received bitstream 112 to different reference bitstreams 114.

The matching value output by bit-wise comparison of the received bitstream 112 and the reference bitstream 114 depends on whether the waveform represented by the received bitstream 112 is in phase with the waveform represented by the reference bitstream 114. This implies that, even if the received bitstream 112 and the reference bitstream 114 represent a same beat frequency, the matching value from bit-wise comparison of the received bitstream 112 and the reference bitstream 114 may be very low if the waveforms represented by the received bitstream 112 and the reference bitstream 114 are out of phase.

In order to take this into account for correctly determining a match between the received bitstream 112 and the reference bitstream 114, the device 100 may store a group of reference bitstreams 114 for each beat frequency. For instance, the set of stored reference bitstreams 114 may comprise two reference bitstreams 114 associated with a same beat frequency, wherein the two reference bitstreams 114 differ by a phase shift, such as a 90° phase shift, between the waveforms represented by the two reference bitstreams 114. It should also be realized that more than two reference bitstreams 114 may be used for each beat frequency.

The comparing of the received bitstream 112 to the reference bitstreams 114 may then form a matching value associated with each group of reference bitstreams 114 based on a combination of the comparing of the received bitstream 112 to each of the reference bitstreams 114 in the group. Thus, even if the waveform of the received bitstream 112 is out of phase with the waveform of one of the reference bitstreams 114 associated with the correct beat frequency, the waveform of the received bitstream 112 may be in phase with the waveform of another of the reference bitstreams 114 associated with the correct beat frequency. Thus, by taking comparison of the received bitstream 112 to the plurality of reference bitstreams 114 into account when determining the matching value for a group of reference bitstreams 114, the comparing of the bitstream 112 may be able to select the correct reference bitstreams 114 for finding the beat frequency represented by the received bitstream 112.

It should be realized that the comparing of the received bitstream 112 to an individual reference bitstream 114 in a group of reference bitstreams 114 may be performed using bit-wise comparison as described above.

According to an alternative, the determining of the matching value between the received bitstream 112 and a reference bitstream 114 comprises determining a plurality of temporary matching values. Each of the temporary matching values may be determined using bit-wise comparison as described above.

Thus, the received bitstream 112 may be compared to the reference bitstream 114 using different shifts of binary digits of the received bitstream 112 to the binary digits of the reference bitstream 114. A first temporary matching value may be determined based on a first shift of binary digits of the received bitstream 112 to the binary digits of the reference bitstream 114 and a second temporary matching value may be determined based on a second shift, different from the first shift, of binary digits of the received bitstream 112 to the binary digits of the reference bitstream 114, and so forth for further temporary matching values for further shifts. Thus, different temporary matching values among the plurality of temporary matching values represent different shifts of binary digits of the received bitstream 112 to the binary digits of the reference bitstream 114.

The different shifts of the bitstreams may be achieved by shifting bits in a register into which the received bitstream 112 is read by periodical sampling. Shifting of bits may be performed between different comparisons of the received bitstream 112 to the reference bitstream 114. Thus, after a comparison has been made to determine a temporary matching value, binary digit(s) of the received bitstream 112 at a start of the register may be shifted out and new binary digit(s) may be added at an end of the register to form a different shift of the binary digits of the received bitstream 112. Then, the received bitstream 112 may again be compared to the stored reference bitstream 114.

The received bitstream 112 may be shifted one bit at a time between comparisons to the reference bitstreams 114. However, it should be realized that the received bitstream 112 may alternatively be shifted a few bits at a time, such as two or three bits. This implies that the received bitstream 112 and the reference bitstream 114 representing the correct distance to the target may not be exactly in phase in any of the comparisons of the received bitstream 112 and the reference bitstream 114. However, it may still be possible to correctly select the reference bitstream 114 representing the correct beat frequency based on the temporary matching values determined. Further, by not performing comparisons for shifts differing by one bit of the received bitstream 112, the number of comparisons needed may be reduced.

The plurality of temporary matching values may be used for determining a matching value for the received bitstream 112 to the reference bitstream 114. The matching value may be determined based on many different ways of combining the temporary matching values to generate an overall matching value. However, according to an embodiment, the matching value of the received bitstream 112 to a reference bitstream 114 may be determined as a maximum value among the plurality of temporary matching values for comparisons of the received bitstream 112 to different shifts of binary digits of the received bitstream 112 to binary digits of the reference bitstream 114.

The plurality of temporary matching values may be sequentially output by comparing units to a matching analyzer module 124. The matching analyzer module 124 may comprise a separate matching analyzer unit for each of the reference bitstreams 114. The matching analyzer unit may thus receive a sequence of temporary matching values corresponding to comparison of the received bitstream 112 to the reference bitstream 114 for different shifts. The matching analyzer unit may determine a matching value based on the sequence of temporary matching values. For instance, the matching analyzer unit may be implemented as a maximum hold circuit, such that a maximum value among the sequence of temporary matching values is held by the matching analyzer unit.

When the received bitstream 112 has been compared to the reference bitstreams 114 for different shifts representing a full period of the beat frequency of the received bitstream 112, a maximum possible value of the matching value between the received bitstream 112 and the reference bitstream 114 has been determined among the temporary matching values. Thus, different shifts may be used representing a full period of possible beat frequencies.

The distance to the target being determined may comprise selecting a reference bitstream 114 among the set of reference bitstreams 114 based on comparing the matching values for the reference bitstreams 114 of the set of reference bitstreams 114 to each other.

According to an embodiment, the matching analyzer module 124 may be configured to output the matching values associated with comparison of the received bitstream 112 to each of the reference bitstreams 114 to a selector 126.

The selector 126 may thus receive the matching values from each of the matching analyzer units and may determine which of the matching values is largest. This may be used for selecting and identifying the reference bitstream 114 that is associated with the largest matching value. Since the reference bitstream 114 represents a waveform that corresponds to a particular distance to the target 10, the distance to the target 10 may thus be determined as the distance associated with the identified reference bitstream 114.

The distance to the target being determined may further comprise selecting a plurality reference bitstreams 114 having largest matching values and forming an interpolation based on the largest matching values to determine the distance to the target 10 with an improved resolution.

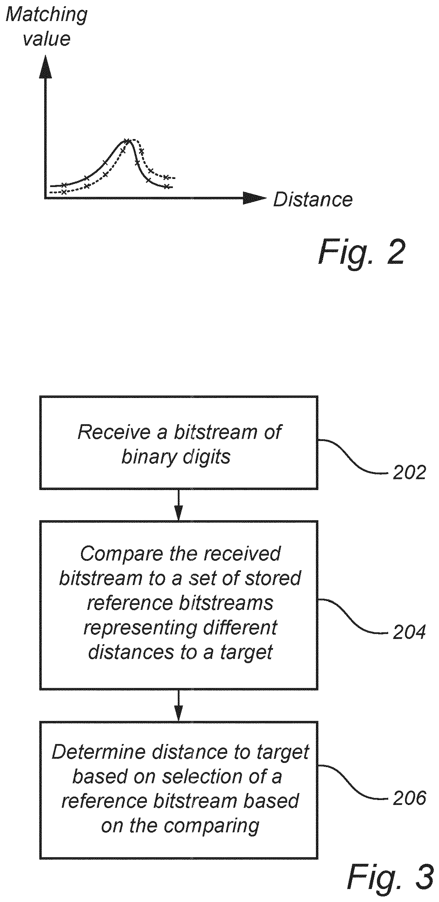

As illustrated in Fig. 2, the matching values for a plurality of reference bitstreams 114 around the reference bitstream 114 having a largest value may be used for plotting a curve of matching values as function of distance. Each of the matching values for a reference bitstream 114 may represent a point on the curve corresponding to a particular distance to the target 10. Thus, by selecting a plurality of reference bitstreams 114, the curve of matching values as function of distance may be estimated. Depending on the matching values, a peak of the curve may be slightly shifted as illustrated by the dashed and straight lines in Fig. 2, such that the distance to the target 10 may be determined with a higher resolution than the resolution provided by the number of reference bitstreams 114 used.

Referring again to Fig. 1, the device 100 may further comprise a controller 130 for controlling components of the device 100. The controller 130 may be configured to control timing of output of chirp pulses by the light source 102. The controller 130 may further be configured to control the frequency in the chirp. The controller 130 may further be configured to control a timing and reset of the detector 106. The controller 130 may further be configured to control the processor 120 to at least reset the matching values stored for reference bitstreams 114. Thus, the controller 130 may be configured to synchronize the components of the device 100, such as controlling timing of the processor 120 in relation to timing of a pulse transmitted by the light source 102.

The processing of the received bitstream 112 discussed above relates to processing of the received bitstream 112 formed by the detected signal of a single pixel. It should be realized that a plurality of pixels may be used for detecting targets in a field of view. Thus, bitstreams 112 may be formed for each of the pixels.

A plurality of bitstreams 112 may be received and processed in parallel. Thus, the processor 120 may be configured with parallel processing parts, which may each be implemented as discussed above, for processing a respective bitstream 112 for determining the distance to target 10. It should be realized that a plurality of bitstreams 112 may be processed in parallel corresponding to a sub-set of pixels. Hence, sub-sets of pixels may be sequentially analyzed for determining the distance to targets 10 within the entire field of view.

The processor 120 described above may be implemented as a general-purpose processing unit, such as a central processing unit (CPU), which may execute the instructions of one or more computer programs in order to process the received bitstream 112 and to determine the distance to the target 10. Hence, a computer program product may be provided, which provides computer-readable instructions for causing the processor 120 to perform the processing. The computer program product may be provided as a signal carrying the computer program product for allowing the computer program product to be loaded into a memory accessible to the processor 120. According to an embodiment, the computer program product may be provided as a non-transient computer program product stored on any tangible media.

The processor 120 may alternatively be implemented as firmware arranged e.g., in an embedded system, or as a specifically designed processing unit, such as an Application-Specific Integrated Circuit (ASIC) or a Field-Programmable Gate Array (FPGA), which may be configured to implement functionality for processing the received bitstream 112.

Referring now to Fig. 3, a method for determining the distance to the target 10 will be briefly summarized. Determination of the distance to the target 10 has already been described above in relation to the device 100, already indicating the method for determining the distance to the target 10. In addition, a brief summary of the method is presented below.

The method for determining the distance to the target comprises receiving 202 a bitstream 112 of binary digits. The bitstream 112 may represent a variation in time of a time-varying signal, wherein the time-varying signal is based on light transmitted by a light source 102 being reflected by the target 10. For instance, the light transmitted by the light source 102 may be mixed with light reflected by the target 10 using FMCW Lidar, such that the time-varying signal may comprise a beat frequency corresponding to a difference in frequency between the light transmitted by the light source 102 and the reflected light. The beat frequency may be dependent on the distance to the target 10. Each binary digit in the bitstream 112 is defined based on the time-varying signal at a time instance represented by the binary digit being above or below a threshold.

The method further comprises comparing 204 the bitstream 112 of binary digits to a set of stored reference bitstreams 114 of binary digits, wherein each reference bitstream **114** represents a distance to the target. Each reference bitstream 114 may represent a waveform corresponding to the beat frequency associated with the distance to the target 10.

The method further comprises determining 206 the distance to the target based on selection of a reference bitstream 114 in the set of stored reference bitstreams 114 based on said comparing.

Thus, the comparing of the bitstream 112 to the reference bitstreams 114 may allow identifying of a reference bitstream 114 matching the bitstream 112. This reference bitstream **114** may then be selected and the distance to the target 10 may be determined as the distance with which the reference bitstream 114 is associated.

## Claims

1. A method for determining a distance to a target (10), said method comprising:
receiving (202) a bitstream (112) of binary digits corresponding to a variation in time of a time-varying signal based on light transmitted by a light source (102) being reflected by the target (10), wherein each binary digit in the bitstream (112) is defined based on the time-varying signal at a time instance represented by the binary digit being above or below a threshold;
comparing (204) the bitstream (112) of binary digits to a set of stored reference bitstreams (114) of binary digits, wherein each reference bitstream (114) represents a distance to the target (10); and
determining (206) the distance to the target (10) based on a selection of a reference bitstream in the set of stored reference bitstreams (114) based on said comparing.

2. The method according to claim 1, further comprising detecting light transmitted by the light source (102) being reflected by the target (10) to form a detected signal and comparing the detected signal to a threshold for converting the detected signal to a binary digit.

3. The method according to claim 2, wherein light being reflected by the target (10) is mixed with light transmitted by the light source (102) to form a mixed light signal and wherein detecting light comprises detecting the mixed light signal.

4. The method according to claim 3, wherein the light transmitted by the light source (102) is a frequency modulated continuous wave, FMCW, signal comprising chirps during which frequency of the FMCW signal is increased.

5. The method according to any one of claims 2-4, wherein an output from comparing the detected signal to the threshold is periodically sampled for forming the bitstream (112) of binary digits.

6. The method according to any one of the preceding claims, wherein the comparing (204) the bitstream (112) of binary digits to a set of stored reference bitstreams (114) of binary digits comprises determining a matching value for each stored reference bitstream (114) based on bit-wise comparison, wherein the matching value represents similarity between the bitstream (112) of binary digits and the stored reference bitstream (114), and wherein the bit-wise comparison comprises comparing the binary digits of the bitstream (112) and the stored reference bitstream (114) at corresponding positions and increasing the matching value when the binary digits are equal.

7. The method according to claim 6, wherein the comparing (204) the bitstream (112) of binary digits to a set of stored reference bitstreams (114) comprises parallel processing of the comparing of the bitstream (112) of binary digits to each of the stored reference bitstreams (114).

8. The method according to claim 6 or 7, wherein, for each stored reference bitstream (114), determining the matching value comprises determining a plurality of temporary matching values using said bit-wise comparison, wherein the plurality of temporary matching values is determined for different shifts of binary digits of the bitstream (112) to binary digits of the reference bitstream (114), wherein the matching value is determined based on the plurality of temporary matching values.

9. The method according to claim 8, wherein the different shifts of binary digits represent different phases of a period of the time-varying signal and wherein the matching values is determined based on a maximum of the plurality of temporary matching values within the period of the time-varying signal.

10. The method according to any one of claims 6-9, wherein determining (206) the distance to the target (10) comprises selecting a reference bitstream among the set of reference bitstreams (114) based on comparing the matching values of the set of reference bitstreams (114) to each other.

11. The method according to claim 10, wherein determining (206) the distance to the target (10) further comprises selecting a plurality of reference bitstreams having largest matching values and forming an interpolation based on the largest matching values to determine the distance to the target (10) with an improved resolution.

12. The method according to any one of the preceding claims, further comprising receiving a plurality of bitstreams of binary digits corresponding to spatially separate detections of light, wherein the plurality of bitstreams is processed in parallel.

13. A device for determining a distance to a target (10), said device comprising:
a processor (120) configured for:
receiving a bitstream (112) of binary digits corresponding to a variation in time of a time-varying signal based on light transmitted by a light source (102) being reflected by the target (10), wherein each binary digit in the bitstream (112) is defined based on the time-varying signal at a time instance represented by the binary digit being above or below a threshold;
comparing the bitstream (112) of binary digits to a set of stored reference bitstreams (114) of binary digits, wherein each reference bitstream (114) represents a distance to the target (10); and
determining the distance to the target (10) based on a selection of a reference bitstream in the set of stored reference bitstreams (114) based on said comparing.

14. The device according to claim 13, further comprising:
a light source (102) for transmitting light towards the target (10);
a mixer (104) for mixing light reflected by the target (10) and light transmitted by the light source (102) for forming a mixed light signal;
a detector (106) for detecting the mixed light signal; and
a comparator (108) for comparing output from the detector (106) to a threshold for converting output from the detector (106) to a binary digit.

15. The device according to claim 14, further comprising a controller (130) for controlling timing of the processor (120) in relation to timing of a pulse transmitted by the light source (102).

## Patentansprüche

1. Verfahren zum Bestimmen einer Entfernung zu einem Ziel (10), wobei das Verfahren umfasst:
Empfangen (202) eines Bitstroms (112) aus Binärziffern, die einer zeitlichen Veränderung eines zeitveränderlichen Signals entsprechen, auf der Grundlage von Licht, das durch eine Lichtquelle (102) ausgesendet und durch das Ziel (10) reflektiert wird, wobei jede Binärziffer in dem Bitstrom (112) auf der Grundlage des zeitveränderlichen Signals an einer Zeitinstanz definiert wird, die durch die Binärziffer dargestellt wird, die über oder unter einer Schwelle liegt;
Vergleichen (204) des Bitstroms (112) aus Binärziffern mit einem Satz gespeicherter Referenzbitströme (114) aus Binärziffern, wobei jeder Referenzbitstrom (114) eine Entfernung zu dem Ziel (10) darstellt; und
Bestimmen (206) der Entfernung zu dem Ziel (10) auf der Grundlage einer Auswahl eines Referenzbitstroms in dem Satz gespeicherter Referenzbitströme (114) auf der Grundlage des Vergleichens.

2. Verfahren nach Anspruch 1, des Weiteren umfassend das Detektieren von Licht umfasst, das durch die Lichtquelle (102) ausgesendet und durch das Ziel (10) reflektiert wird, um ein detektiertes Signal zu bilden, und das Vergleichen des detektierten Signals mit einer Schwelle, um das detektierte Signal in eine Binärziffer umzuwandeln.

3. Verfahren nach Anspruch 2, wobei durch das Ziel (10) reflektiertes Licht mit durch die Lichtquelle (102) ausgesendetem Licht vermischt wird, um ein Mischlichtsignal zu bilden, und wobei das Detektieren von Licht das Detektieren des Mischlichtsignals umfasst.

4. Verfahren nach Anspruch 3, wobei das durch die Lichtquelle (102) ausgesendete Licht ein frequenzmoduliertes Dauerstrichsignal (Frequency Modulated Continuous Wave, FMCW-Signal) ist, das Chirps umfasst, während denen die Frequenz des FMCW-Signals erhöht wird.

5. Verfahren nach einem der Ansprüche 2-4, wobei eine Ausgabe aus dem Vergleichen des detektierten Signals mit der Schwelle periodisch abgetastet wird, um den Bitstrom (112) aus Binärziffern zu bilden.

6. Verfahren nach einem der vorangehenden Ansprüche, wobei das Vergleichen (204) des Bitstroms (112) aus Binärziffern mit einem Satz gespeicherter Referenzbitströme (114) aus Binärziffern das Bestimmen eines übereinstimmenden Wertes für jeden gespeicherten Referenzbitstrom (114) auf der Grundlage eines bitweisen Vergleichs umfasst, wobei der übereinstimmende Wert eine Ähnlichkeit zwischen dem Bitstrom (112) aus Binärziffern und dem gespeicherten Referenzbitstrom (114) darstellt, und wobei der bitweise Vergleich das Vergleichen der Binärziffern des Bitstroms (112) und des gespeicherten Referenzbitstroms (114) an entsprechenden Positionen und das Erhöhen des übereinstimmenden Wertes, wenn die Binärziffern gleich sind, umfasst.

7. Verfahren nach Anspruch 6, wobei das Vergleichen (204) des Bitstroms (112) aus Binärziffern mit einem Satz gespeicherter Referenzbitströme (114) ein paralleles Verarbeiten des Vergleichens des Bitstroms (112) aus Binärziffern mit jedem der gespeicherten Referenzbitströme (114) umfasst.

8. Verfahren nach Anspruch 6 oder 7, wobei für jeden gespeicherten Referenzbitstrom (114) das Bestimmen des übereinstimmenden Wertes das Bestimmen mehrerer temporärer übereinstimmender Werte unter Verwendung des bitweisen Vergleichs umfasst, wobei die mehreren temporären übereinstimmenden Werte für verschiedene Verschiebungen von Binärziffern des Bitstroms (112) zu Binärziffern des Referenzbitstroms (114) bestimmt werden, wobei der übereinstimmende Wert auf der Grundlage der mehreren temporären übereinstimmenden Werte bestimmt wird.

9. Verfahren nach Anspruch 8, wobei die verschiedenen Verschiebungen von Binärziffern verschiedene Phasen einer Periode des zeitveränderlichen Signals darstellen, und wobei die übereinstimmenden Werte auf der Grundlage eines Maximums der mehreren temporären übereinstimmenden Werte innerhalb der Periode des zeitveränderlichen Signals bestimmt werden.

10. Verfahren nach einem der Ansprüche 6-9, wobei das Bestimmen (206) der Entfernung zu dem Ziel (10) das Auswählen eines Referenzbitstroms aus dem Satz von Referenzbitströmen (114) auf der Grundlage des Vergleichens der übereinstimmenden Werte des Satzes von Referenzbitströmen (114) miteinander umfasst.

11. Verfahren nach Anspruch 10, wobei das Bestimmen (206) der Entfernung zu dem Ziel (10) des Weiteren das Auswählen mehrerer Referenzbitströme, die die größten übereinstimmenden Werte aufweisen, und das Bilden einer Interpolation auf der Grundlage der größten übereinstimmenden Werte umfasst, um die Entfernung zu dem Ziel (10) mit einer verbesserten Auflösung zu bestimmen.

12. Verfahren nach einem der vorangehenden Ansprüche, des Weiteren umfassend das Empfangen mehrerer Bitströme aus Binärziffern, die räumlich getrennten Detektionen von Licht entsprechen, wobei die mehreren Bitströmen parallel verarbeitet werden.

13. Vorrichtung zum Bestimmen einer Entfernung zu einem Ziel (10), wobei die Vorrichtung umfasst:
einen Prozessor (120), der eingerichtet ist zum:
Empfangen eines Bitstroms (112) aus Binärziffern, die einer zeitlichen Veränderung eines zeitveränderlichen Signals entsprechen, auf der Grundlage von Licht, das durch eine Lichtquelle (102) ausgesendet und durch das Ziel (10) reflektiert wird, wobei jede Binärziffer in dem Bitstrom (112) auf der Grundlage des zeitveränderlichen Signals an einer Zeitinstanz definiert wird, die durch die Binärziffer dargestellt wird, die über oder unter einer Schwelle liegt;
Vergleichen des Bitstroms (112) aus Binärziffern mit einem Satz gespeicherter Referenzbitströme (114) aus Binärziffern, wobei jeder Referenzbitstrom (114) eine Entfernung zu dem Ziel (10) darstellt; und
Bestimmen der Entfernung zu dem Ziel (10) auf der Grundlage einer Auswahl eines Referenzbitstroms in dem Satz gespeicherter Referenzbitströme (114) auf der Grundlage des Vergleichens.

14. Vorrichtung nach Anspruch 13, des Weiteren umfassend:
eine Lichtquelle (102) zum Aussenden von Licht in Richtung des Ziels (10);
einen Mischer (104) zum Mischen von durch das Ziel (10) reflektiertem Licht und durch die Lichtquelle (102) gesendetem Licht, um ein Mischlichtsignal zu bilden;
einen Detektor (106) zum Detektieren des Mischlichtsignals; und
einen Komparator (108) zum Vergleichen der Ausgabe von dem Detektor (106) mit einer Schwelle, um die Ausgabe von dem Detektor (106) in eine Binärziffer umzuwandeln.

15. Vorrichtung nach Anspruch 14, des Weiteren umfassend einen Controller (130) für die zeitliche Steuerung des Prozessors (120) in Bezug auf den Zeitpunkt eines durch die Lichtquelle (102) ausgesendeten Impulses.

## Revendications

1. Procédé de détermination de la distance par rapport à une cible (10), comprenant les étapes suivantes :
la réception (202) d'un flux binaire (112) de bits correspondant à une variation temporelle d'un signal variable, basé sur la lumière émise par une source lumineuse (102) étant réfléchie par la cible (10), dans lequel chaque bit du flux binaire (112) est défini sur la base de la variation temporelle du signal, à un instant donné représenté par le le bit étant supérieur ou inférieur à un seuil ;
la comparaison (204) du flux binaire (112) de bits à un ensemble de flux binaires de référence (114) mémorisés, dans lequel chaque flux binaire de référence (114) représente une distance par rapport à la cible (10) ; et
la détermination (206) de la distance par rapport à la cible (10) sur la base d'une sélection d'un flux binaire de référence parmi l'ensemble de flux binaires de référence mémorisés (114) issus de ladite comparaison.

2. Procédé selon la revendication 1, comprenant en outre la détection de la lumière émise par la source lumineuse (102) étant réfléchie par la cible (10) pour former un signal de détection et la comparaison du signal détecté à un seuil pour convertir le signal détecté en un bit.

3. Procédé selon la revendication 2, dans lequel la lumière réfléchie par la cible (10) est mélangée à la lumière émise par la source lumineuse (102) pour former un signal lumineux mixte et dans lequel la détection de la lumière consiste à détecter le signal lumineux mixte.

4. Procédé selon la revendication 3, dans lequel la lumière émise par la source lumineuse (102) est un signal à onde continue modulée en fréquence (FMCW) comprenant des modulations de fréquence (chirps) pendant lesquelles la fréquence du signal FMCW augmente.

5. Procédé selon une quelconque des revendications 2 à 4, dans lequel le signal de sortie issu de la comparaison du signal de détection au seuil est échantillonné périodiquement pour former le flux binaire (112) de bits.

6. Procédé selon une quelconque des revendications précédentes, dans lequel la comparaison (204) du flux binaire (112) de bits à un ensemble de flux binaires de référence mémorisés (114) comprend la détermination d'une valeur de correspondance pour chaque flux binaire de référence mémorisé (114) par comparaison bit à bit, dans lequel la valeur de correspondance représente la similarité entre le flux binaire (112) de bits et le flux binaire de référence mémorisé (114), et dans lequel la comparaison bit à bit consiste à comparer les bits du flux binaire (112) et du flux binaire de référence mémorisé (114) aux positions correspondantes et à augmenter la valeur de correspondance lorsque les bits sont égaux.

7. Procédé selon la revendication 6, dans lequel la comparaison (204) du flux binaire (112) de bits à un ensemble de flux binaires de référence mémorisés (114) comprend un traitement parallèle de la comparaison du flux binaire (112) de bits à chacun des flux binaires de référence mémorisés (114).

8. Procédé selon la revendication 6 ou 7, dans lequel, pour chaque flux binaire de référence mémorisé (114), la détermination de la valeur correspondante comprend :
la détermination d'une pluralité de valeurs correspondantes temporaires au moyen de ladite comparaison bit à bit, dans lequel la pluralité de valeurs correspondantes temporaires est déterminée pour différents décalages de bits du flux binaire (112) par rapport aux bits du flux binaire de référence (114), dans lequel la valeur correspondante est déterminée sur la base de la pluralité de valeurs correspondantes temporaires.

9. Procédé selon la revendication 8, dans lequel les différents décalages de bits représentent différentes phases d'une période du signal variable dans le temps et dans lequel les valeurs correspondantes sont déterminées sur la base d'une valeur maximale de la pluralité de valeurs correspondantes temporaires au sein de la période du signal variable dans le temps.

10. Procédé selon une quelconque des revendications 6 à 9, dans lequel la détermination (206) de la distance par rapport à la cible (10) comprend la sélection d'un flux binaire de référence parmi l'ensemble de flux binaires de référence (114) sur la base de la comparaison des valeurs correspondantes de l'ensemble de flux binaires de référence (114) les uns aux autres.

11. Procédé selon la revendication 10, dans lequel la détermination de la distance par rapport à la cible (10) comprend en outre la sélection d'un ensemble de flux binaires de référence présentant les valeurs correspondantes les plus élevées et la réalisation d'une interpolation basée sur les valeurs correspondantes les plus élevées afin de déterminer la distance par rapport à la cible (10) avec une résolution améliorée.

12. Procédé selon une quelconque des revendications précédentes, comprenant en outre la réception d'une pluralité de flux binaires de bits correspondant à des détections de lumière spatialement distinctes, dans lequel la pluralité de flux binaires est traitée en parallèle.

13. Dispositif de détermination de la distance par rapport à une cible (10), comprenant :
un processeur (120) configuré pour :
recevoir un flux binaire (112) de bits correspondant à une variation temporelle d'un signal variant dans le temps, basé sur la lumière émise par une source lumineuse (102) étant réfléchie par la cible (10), dans lequel chaque bit du flux binaire (112) est défini sur la base du signal variant dans le temps à un instant donné représenté par le bit étant supérieur ou inférieur à un seuil ;
comparer le flux binaire (112) de bits à un Ensemble de flux binaires de référence mémorisés (114) de bits, dans lequel chaque flux binaire de référence (114) représente une distance par rapport à la cible (10) ; et
déterminer la distance par rapport à la cible (10) par sélection d'un flux de bits de référence parmi l'ensemble de flux binaires de référence mémorisés (114), sur la base de ladite comparaison.

14. Dispositif selon la revendication 13 comprenant en outre :
une source lumineuse (102) pur émettre de la lumière vers la cible (10) ;
un mélangeur (104) pour mélanger la lumière réfléchie par la cible (10) et la lumière émise par la source lumineuse (102) pour former un signal lumineux mixte ;
un détecteur (106) pour détecter le signal lumineux mixte ; et
un comparateur (108) pour comparer le signal de sortie du détecteur (106) à un seuil pour convertir le signal de sortie du détecteur (106) en un bit.

15. Dispositif selon la revendication 14, comprenant en outre un contrôleur (130) pour contrôler la synchronisation du processeur (120) par rapport à la synchronisation d'une impulsion transmise par la source lumineuse (102).
